# FASCICULE DE BREVET EUROPEEN

(11) **EP 2 042 065 B1**
(45) Date de publication et mention de la délivrance du brevet: **01.12.2010**
(21) Numéro de dépôt: 08356125.8
(22) Date de dépôt: 10.09.2008
(51) Int. Cl.: A47J 43/044, A47J 43/07, A47J 43/08

(54) **Appareil électroménager de préparation culinaire prévu pour être tenu à la main muni d'un élément guide cordon**
Haushaltsgerät zur Essenszubereitung, das zum Halten in der Hand konzipiert und mit einem Kabelführungselement ausgestattet ist
Household cooking appliance designed to be held in the hand equipped with cable guide element

(30) Priorité: 25.09.2007 FR 0706706
(43) Date de publication de la demande: 01.04.2009
(73) Titulaire: Seb S.A., 69130 Ecully (FR)
(72) Inventeur: Lecerf, Joël, 50190 Periers (FR)
(74) Mandataire: Kiehl, Hubert

(56) Documents cités:
- US-A- 4 850 699

## Description

La présente invention concerne le domaine technique général des appareils électroménagers de préparation culinaire tenus à la main, tel qu'un mixeur plongeant, et concerne plus particulièrement un appareil électroménager comportant un boîtier renfermant un moteur électrique commandé par un interrupteur alimenté par des fils électriques issus d'un cordon pénétrant dans le boîtier au travers d'une ouverture munie d'un élément guide cordon.

Il est connu, du document US 4 850 699, un mixeur plongeant comportant un boîtier renfermant un moteur électrique commandé par un interrupteur et raccordé au réseau d'alimentation électrique par des fils issus d'un cordon pénétrant dans le boîtier au travers d'une ouverture muni d'un dispositif guide cordon.

Cependant, dans ce document, l'interrupteur est supporté par une plaque de circuit imprimé qui est rapportée à l'intérieur du boîtier de manière indépendante du dispositif guide cordon. Il est ainsi difficile, lors du montage de l'appareil, de mettre correctement en place la plaque de circuit imprimé du fait notamment de son raccordement aux fils électriques d'alimentation qui génèrent des efforts tendant à déplacer la plaque de circuit imprimé dans le boîtier. Une telle opération de montage est donc difficilement automatisable et un mauvais placement des fils électriques ou du circuit imprimé lors du montage de l'appareil peut être à l'origine de courts-circuits mettant l'appareil hors d'usage.

L'invention qui suit vise à pallier ces inconvénients en proposant un appareil électroménager de préparation culinaire dans lequel le montage du circuit d'alimentation électrique est grandement simplifié et permet de réduire les défauts dus au montage.

Le but de l'invention est atteint par un appareil électroménager de préparation culinaire prévu pour être tenu à la main comprenant un boîtier renfermant un moteur électrique commandé par un interrupteur, le moteur étant alimenté par des fils électriques provenant d'un cordon pénétrant dans le boîtier au travers d'une ouverture recevant un élément guide cordon protégeant le cordon à la sortie du boîtier, caractérisé en ce que l'élément guide cordon se prolonge à l'intérieur du boîtier par une platine qui comporte des moyens d'immobilisation des fils électriques, l'élément guide cordon et la platine étant formés par une seule et même pièce monobloc.

Une telle caractéristique permet d'avoir un élément guide cordon qui se prolonge par une platine supportant les fils électriques assurant un prépositionnement des fils facilitant grandement le montage du boîtier moteur en assurant un écartement optimal des fils et en limitant le risque de pincements des fils électriques.

Selon d'autres modes particuliers de réalisation, le boîtier d'appareil électroménager selon l'invention peut comprendre l'une ou plusieurs des combinaisons prises isolément ou selon toutes les combinaisons techniquement possibles :
- la pièce monobloc est réalisée en matériau souple,
- la pièce monobloc est obtenue par un procédé de moulage,
- la pièce monobloc est surmoulée sur le cordon,
- la platine supporte l'interrupteur de commande du moteur,
- la platine supporte également un condensateur anti-parasitage,
- l'élément guide cordon comporte un manchon enveloppant la sortie de cordon et la platine présente la forme d'une plaque sensiblement rectangulaire venant dans le prolongement axial de la sortie de cordon,
- les moyens d'immobilisation comportent des griffes assurant le maintien en position des fils électriques.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective éclatée de l'appareil électroménager selon un mode particulier de réalisation de l'invention ;
- les figures 2 et 3 sont des vues en perspective du dispositif guide cordon prolongé par la platine support de l'appareil selon l'invention ;

Seuls les éléments nécessaires à la compréhension de l'invention ont été représentés. Pour faciliter la lecture des dessins, les mêmes éléments portent les mêmes références d'une figure à l'autre.

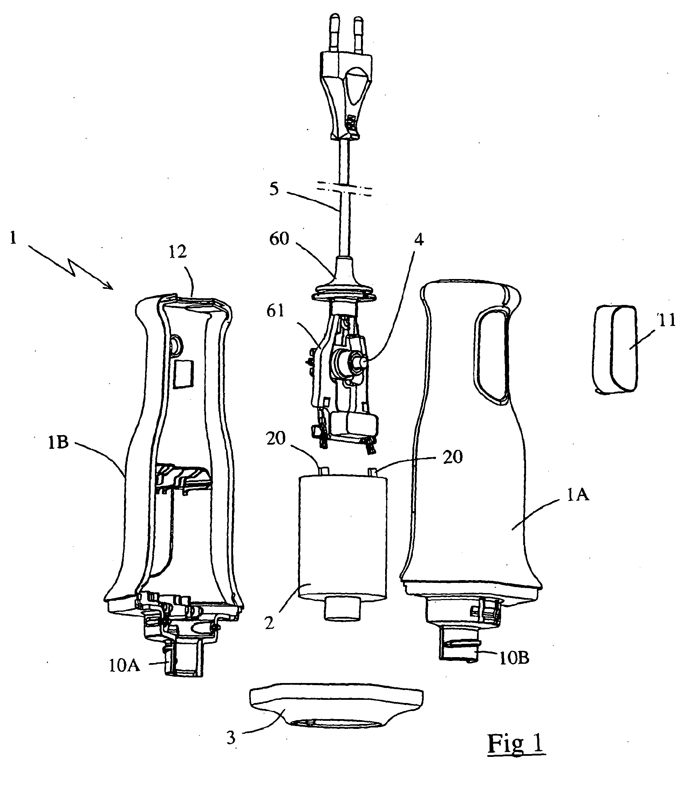

La figure 1 représente une vue en perspective éclatée d'un boîtier 1 d'appareil électroménager comportant un corps de forme allongée dont une extrémité longitudinale est destinée à être accouplée à un accessoire, tel un accessoire batteur ou un pied de mixage, non représenté sur les figures.

Conformément à cette figure, le boîtier 1 comporte un corps de section circulaire constitué essentiellement par deux coquilles 1 A et 1B assemblées l'une sur l'autre, ces deux coquilles 1 A, 1B comportant chacune un demi-manchon d'accouplement 10A,10B à leur extrémité inférieure muni d'un filetage permettant la fixation de l'accessoire.

Les deux coquilles 1A,1B renferment, de manière connue en soi, un moteur électrique 2 assurant l'entraînement de l'outil de travail de l'accessoire lorsque ce dernier est accouplé au boîtier, le moteur 2 étant représenté schématiquement sur la figure 1.

De manière avantageuse, et afin d'augmenter la rapidité de montage, les deux coquilles 1A, 1B sont fixés l'une sur l'autre au moyen d'une bague 3 rapportée à l'extrémité inférieure du boîtier 1, cette bague 3 étant verrouillée par clipsage sur les deux coquilles 1 A, 1B du boîtier, les coquilles étant fixées à l'autre extrémité du boîtier 1 au moyen d'une vis.

Le moteur 2 comporte des bornes de connexion 20 pour son raccordement à un circuit d'alimentation comprenant un interrupteur de commande 4 permettant de contrôler la mise en marche du moteur 2, cet interrupteur de commande 4 étant actionnable par un bouton 11 porté par la coquille 1 A.

Le circuit d'alimentation du moteur 2 est relié au réseau électrique au moyen d'un cordon d'alimentation 5 pénétrant dans le boîtier 1 par une ouverture 12 recevant un élément guide cordon 60 venant envelopper le cordon 5 à la sortie du boîtier 1 pour protéger ce dernier et lui donner une orientation préférentielle, le cordon 5 comprenant une gaine de protection renfermant deux fils électriques 51, 52 pour une alimentation en 220V alternatif.

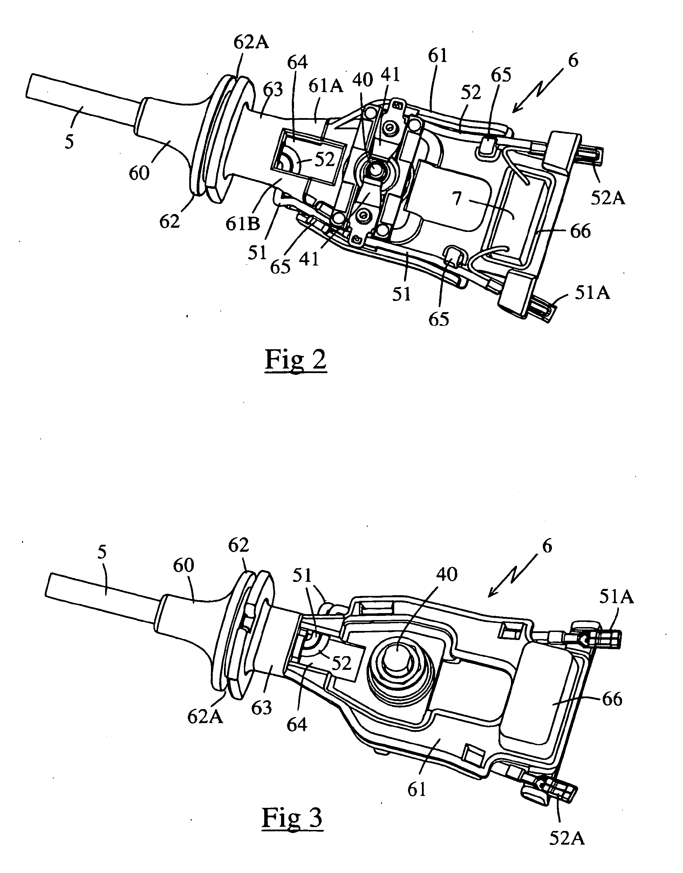

Plus particulièrement selon l'invention et conformément aux figures 2 et 3, l'élément guide cordon 60 est relié à une platine 61 supportant les fils électriques 51, 52 issu du cordon d'alimentation 5.

De manière préférentielle, l'élément guide cordon 60 et la platine support 61 sont formés par une seule et même pièce monobloc 6 surmoulée partiellement sur le cordon 5, cette pièce étant avantageusement réalisée en chlorure de polyvinyle ou en matériau élastomère tel que du silicone

La pièce 6 comporte un manchon de protection 60, constituant le dispositif guide cordon destiné à s'étendre à l'extérieur du boîtier 1, qui est surmoulé sur le cordon 5 et comprend une base évasée se prolongeant par une bride de fixation 62. La bride de fixation 62 comporte une rainure périphérique 62A dans laquelle vient s'engager les parois des coquilles du boîtier 1 A, 1 B de sorte que la pièce 6 est immobilisée par rapport au boîtier 1 lorsque la bride de fixation 62 est prise en sandwich entre les deux coquilles 1 A, 1 B.

La bride de fixation 62 se prolonge, à l'intérieur du boîtier 1, par un noyau 63 d'une longueur de l'ordre de 8 mm, de section sensiblement ovale, qui est surmoulé sur le cordon 5 et qui est relié à la platine 61 par deux bras de liaison 61 A, 61 B s'étendant de part et d'autre d'une ouverture 64 dans laquelle débouchent les deux fils électriques 51, 52 du cordon, la gaine du cordon s'interrompant à hauteur de l'ouverture 64.

Les deux fils électriques 51, 52 issus du cordon présentent un coude au niveau de l'ouverture 64 et traversent l'un des bras de liaison 61 A pour être rassemblés d'un côté de la platine 61, cette dernière présentant une forme globalement rectangulaire s'étendant dans l'axe du cordon 5 sur une longueur de l'ordre de 50 mm et sur une largeur de l'ordre de 35 mm.

De manière avantageuse, l'interrupteur 4 de commande du moteur est supporté par la platine 61 et comporte un contacteur 40 se déplaçant axialement au travers d'une ouverture de la platine 61 pour venir relier électriquement deux lames de contact 41 s'étendant transversalement à la platine.

La platine 61 comporte des griffes de maintien 65 permettant d'immobiliser les deux fils électriques 51,52 le long de la platine, l'un des fils longeant le bord de la platine 61 jusqu'à une première cosse de connexion 51A et l'autre fils 52 étant relié à l'interrupteur 4 puis cheminant le long de l'autre bord de la platine jusqu'à une seconde cosse de connexion 52A, les première et seconde cosses de connexion 51A, 52A étant disposées à l'extrémité longitudinale de la platine 61 et étant adaptées pour être reliées aux bornes du moteur 2.

Selon un mode de réalisation préférentiel de l'invention, la platine 61 comporte également une cavité formant un logement de réception 66 pour un condensateur anti-parasitage 7 reliant les deux cosses de connexion 51 A, 52A.

On obtient ainsi une seule et même pièce, à faible coût, réalisant à la fois la fonction guide cordon et le maintien relatif des principaux éléments nécessaires au circuit d'alimentation du moteur.

L'assemblage des éléments du circuit d'alimentation du moteur, tel que le raccordement de l'interrupteur et du condensateur, peut ainsi être réalisé en dehors de la ligne de montage des coquilles du boîtier moteur de sorte que le sous ensemble ainsi obtenu peut être testé facilement avant son montage dans les coquilles pour une plus grande fiabilité. De plus, le parfait maintien des éléments du circuit d'alimentation par la platine support permet de réduire fortement les risques de création de court circuit par pincement lors du montage de la pièce dans les coquilles du boîtier.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention définie par les revendications.

Ainsi, dans une variante de réalisation de l'invention, la platine support pourra être réalisée dans une matière différente de celle utilisée pour la réalisation de l'élément guide cordon.

## Revendications

1. Appareil électroménager de préparation culinaire prévu pour être tenu à la main comprenant un boîtier (1) renfermant un moteur électrique (2) commandé par un interrupteur (4), ledit moteur (2) étant alimenté par des fils électriques (51, 52) provenant d'un cordon (5) pénétrant dans ledit boîtier (1) au travers d'une ouverture (12) recevant un élément guide cordon (60) protégeant le cordon (5) à la sortie du boîtier (1), **caractérisé en ce que** ledit élément guide cordon (60) se prolonge à l'intérieur du boîtier (1) par une platine (61) qui comporte des moyens d'immobilisation (65) desdits fils électriques (51, 52), ledit élément guide cordon (60) et ladite platine (61) étant formés par une seule et même pièce (6) monobloc.

2. Appareil électroménager selon la revendication 1, **caractérisé en ce que** ladite pièce monobloc (6) est réalisée en matériau souple.

3. Appareil électroménager selon l'une quelconque des revendications 1 à 2, **caractérisé en ce que** ladite pièce monobloc (6) est obtenue par un procédé de moulage.

4. Appareil électroménager selon la revendication 3, **caractérisé en ce que** ladite pièce (6) est surmoulée sur le cordon (5).

5. Appareil électroménager selon l'une quelconque des revendications 1 à 4, **caractérisé en ce que** ladite platine (61) supporte l'interrupteur (4) de commande du moteur.

6. Appareil électroménager selon l'une quelconque des revendications 1 à 5, **caractérisé en ce que** ladite platine (61) supporte également un condensateur (7) anti-parasitage.

7. Appareil électroménager selon l'une quelconque des revendications 1 à 6, **caractérisé en ce que** ledit élément guide cordon (60) comporte un manchon enveloppant la sortie de cordon et **en ce que** ladite platine (61) présente la forme d'une plaque sensiblement rectangulaire venant dans le prolongement axial de la sortie de cordon (5).

8. Appareil électroménager selon l'une quelconque des revendications 1 à 7, **caractérisé en ce que** lesdits moyens d'immobilisation (65) comportent des griffes assurant le maintien en position des fils électriques (51,52).

## Claims

1. A handheld electrical household appliance intended for culinary preparation including a casing (1) housing an electric motor (2) controlled by a switch (4), said motor (2) being powered by electric wires (51, 52) originating from a cord (5) that extends into said casing (1) through an opening (12) which receives a cord guide element (60) which protects the cord (5) at the point at which it exits the casing (1), **characterised in that** said cord guide element (60) extends into the casing (1) by a plate (61) comprising means (65) for blocking the movement of said electric wires (51, 52), said cord guide element (60) and said plate (61) being formed from a single one-piece part (6).

2. A household appliance according to claim 1, **characterised in that** said one-piece part (6) is made of a flexible material.

3. A household appliance according to any one of claims 1 to 2, **characterised in that** said one-piece part (6) is obtained by a moulding method.

4. A household appliance according to claim 3, **characterised in that** said part (6) is over-moulded on the cord (5).

5. A household appliance according to any one of claims 1 to 4 **characterised in that** said plate (61) supports the motor control switch (4).

6. A household appliance according to any one of claims 1 to 5, **characterised in that** said plate (61) also supports an anti-interference capacitor (7).

7. A household appliance according to any one of claims 1 to 6, **characterised in that** said cord guide element (60) comprises a sleeve surrounding the cord outlet and **in that** said plate (61) has a substantially rectangular shape and extends in axial alignment with the cord outlet (5).

8. A household appliance according to any one of claims 1 to 7, **characterised in that** said blocking means (65) comprise claws to maintain the electric wires (51, 52) in position.

## Patentansprüche

1. Elektrohaushaltsgerät für kulinarische Zubereitungen, das zum Halten mit der Hand vorgesehen ist, umfassend ein Gehäuse (1), das einen Elektromotor (2) einschließt, der von einem Schalter (4) betätigt wird, wobei der Motor (2) über elektrische Drähte (51, 52) gespeist wird, die aus einem Kabel (5) stammen, das in das Gehäuse (1) durch eine Öffnung (12) eindringt, die ein Kabelführungselement (60) aufnimmt, welches das Kabel (5) am Ausgang des Gehäuses (1) schützt, **dadurch gekennzeichnet, dass** das Kabelführungselement (60) im Inneren des Gehäuses (1) von einer Platine (61) verlängert wird, die Mittel zum Fixieren (65) der elektrischen Drähte (51, 52) umfasst, wobei das Kabelführungselement (60) und die Platine (61) von ein und demselben einteiligen Teil (6) gebildet werden.

2. Elektrohaushaltsgerät nach Anspruch 1, **dadurch gekennzeichnet, dass** das einteilige Teil (6) aus einem biegsamen Material hergestellt ist.

3. Elektrohaushaltsgerät nach einem der Ansprüche 1 bis 2, **dadurch gekennzeichnet, dass** das einteilige Teil (6) durch ein Formverfahren erhalten wird.

4. Elektrohaushaltsgerät nach Anspruch 3, **dadurch gekennzeichnet, dass** das einteilige Teil (6) über das Kabel (5) geformt ist.

5. Elektrohaushaltsgerät nach einem der Ansprüche 1 bis 4, **dadurch gekennzeichnet, dass** die Platine (61) den Schalter (4) zur Betätigung des Motors trägt.

6. Elektrohaushaltsgerät nach einem der Ansprüche 1 bis 5, **dadurch gekennzeichnet, dass** die Platine (61) ebenfalls einen Störschutzkondensator (7) trägt.

7. Elektrohaushaltsgerät nach einem der Ansprüche 1 bis 6, **dadurch gekennzeichnet, dass** das Kabelführungselement (60) einen Stutzen umfasst, der den Kabelausgang umhüllt, und dadurch, dass die Platine (61) die Form einer im Wesentlichen rechteckigen Platte aufweist, die sich in der axialen Verlängerung des Ausgangs des Kabels (5) erstreckt.

8. Elektrohaushaltsgerät nach einem der Ansprüche 1 bis 7, **dadurch gekennzeichnet, dass** die Mittel zum Fixieren (65) Krallen umfassen, die sicherstellen, dass die elektrischen Drähte (51,52) in Position gehalten werden.
